# FASCICULE DE BREVET EUROPEEN

(11) **EP 4 264 397 B1**
(45) Date de publication et mention de la délivrance du brevet: **05.02.2025**
(21) Numéro de dépôt: 21851671.4
(22) Date de dépôt: 13.12.2021
(51) Int. Cl.: G05G 5/03, G05G 9/047

(54) **STRUCTURE POUR INTERFACE HAPTIQUE A DEUX DEGRÉS DE LIBERTÉ**
STRUKTUR FÜR EINE HAPTISCHE SCHNITTSTELLE MIT ZWEI FREIHEITSGRADEN
STRUCTURE FOR HAPTIC INTERFACE WITH TWO DEGREES OF FREEDOM

(30) Priorité: 21.12.2020 FR 2013864
(43) Date de publication de la demande: 25.10.2023
(73) Titulaire: Commissariat à l'Energie Atomique et aux Energies Alternatives, 75015 Paris (FR)
(72) Inventeur: CHANGEON, Gwenael, 91191 GIF-SUR-YVETTE Cedex (FR)
(74) Mandataire: Brevalex
(86) Numéro de dépôt international: PCT/FR2021/052308
(87) Numéro de publication internationale: WO 2022/136768

(56) Documents cités:
- EP-A1- 1 739 531
- EP-A1- 3 516 483
- SENKAL DORUK ET AL: "Spherical MR-Brake with Nintendo Wii Sensors for Haptics", 8 July 2010, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 160 - 1, ISBN: 978-3-642-17318-9, XP047400428

## Description

### DOMAINE TECHNIQUE ET ÉTAT DE LA TECHNIQUE ANTÉRIEURE

La présente invention se rapporte à une structure pour interface haptique à deux degrés de liberté à encombrement réduit, et à une interface haptique comportant une telle structure.

Une interface haptique peut être utilisée pour commander ou contrôler un système, tel qu'une machine de manutention ou un pont roulant ou dans le domaine du divertissement pour les manettes de jeu vidéo ou les télécommandes en modélisme.

L'interface haptique comporte un effecteur, également appelé joystick, à deux degrés de liberté. Un effort résistant s'oppose au déplacement de l'effecteur en fonction par exemple de sa position. En modulant l'effort résistant en fonction de la position de l'effecteur et de la direction souhaitée, il est possible de guider le déplacement du joystick suivant des directions privilégiées et de définir des motifs haptiques, tels qu'un crantage, qui seront ressentis par l'utilisateur lorsqu'il déplace l'effecteur.

Le document EP3516483 décrit une interface haptique comportant un joystick à au moins deux degré de liberté mettant en œuvre deux freins magnéto rhéologiques qui forme deux freins passifs, chacun freinant plus ou moins la rotation d'un axe qui est relié par un système de cardan au joystick. Les freins passifs ne peuvent générer qu'un effort résistant s'opposant à un effort appliqué par l'utilisateur. Cette interface donne satisfaction cependant elle présente un encombrement important qui ne permet pas son intégration dans des systèmes portables ou mobiles.

Le document « Spherical MR-Brake with Nintendo Wii Sensors for Haptics », Doruk Senkal and Hakan Gurocak in Haptics: Generating and Perceiving Tangible Sensations, International Conference, EuroHaptics 2010 Amsterdam, July 8-10, 2010 Proceedings, Part Il, Pages 161-165, décrit un joystick utilisant un frein à fluide magnétorhéologique comportant une sphère à laquelle est fixé le joystick, reçue dans un logement sphérique. Un fluide magnétorhéologique est reçu entre la sphère et le logement. Ce frein ne permet pas de guider l'utilisateur dans des directions privilégiées.

### EXPOSÉ DE L'INVENTION

C'est par conséquent un but de la présente invention d'offrir une structure pour interface haptique à deux degrés de liberté en rotation permettant un guidage amélioré de l'effecteur mis en mouvement par l'opérateur, et présentant un encombrement réduit par rapport aux interfaces de l'état de la technique.

Le but énoncé ci-dessus est atteint par une structure pour interface haptique à deux degrés de liberté en rotation comportant un effecteur destiné à être manipulé par l'utilisateur et deux articulations pivots autour deux axes, auxquelles l'effecteur est relié, les deux articulations pivots étant imbriquées l'une dans l'autre et formant des freins passifs autour de chacune de leur axe. Chaque frein met par exemple en œuvre un fluide magnétorhéologique.

Ce système de frein permet de contrôler indépendamment les mouvements de l'effecteur dans les deux directions. En outre, en imbriquant les deux articulations pivots, un gain de place important est obtenu.

Dans un exemple préféré, chaque articulation pivot est formée par une liaison rotule limitée à une rotation autour d'un seul axe. L'une des liaisons est reçue dans l'autre liaison.

Chaque liaison pivot comporte une sphère intérieure reçue dans une sphère extérieure, le fluide magnétorhéologique étant reçu entre les deux sphères.

De manière avantageuse, le fluide magnétorhéologique est confiné dans le carter de l'interface au moyen d'une membrane. Comparé à une solution d'étanchéité par joint torique directement au contact des sphères, cette membrane permet de réduire les frottements et rend plus transparent le déplacement de l'effecteur notamment lors d'un fonctionnement sans application d'un freinage. En outre elle peut assurer une fonction de rappel de l'effecteur en position repos.

La présente demande a alors pour objet une structure pour interface haptique à deux degrés de liberté comportant :
- un élément d'interaction avec l'utilisateur, destiné à être mobile selon deux degrés de liberté,
- un premier frein passif et un deuxième frein passif aptes à exercer un effort résistant autour d'un premier axe et d'un deuxième axe respectivement,
- le premier frein passif comportant une première liaison pivot autour d'une première direction de rotation comportant un premier élément sphérique auquel est fixé l'effecteur, reçu dans un deuxième élément sphérique formant logement pour le premier élément sphérique, le déplacement du premier élément sphérique dans le deuxième élément sphérique étant une rotation autour de la première direction de rotation,
- le deuxième frein passif comportant une deuxième liaison pivot autour d'une deuxième direction de rotation comportant un troisième élément sphérique solidaire en mouvement du deuxième élément sphérique et reçu dans un logement comportant une paroi sphérique, le déplacement du troisième élément sphérique dans le logement étant une rotation autour de la deuxième direction de rotation,
- un premier fluide dont la viscosité apparente varie en fonction d'un premier stimulus extérieur entre le premier élément sphérique et le deuxième élément sphérique,
- un deuxième fluide dont la viscosité apparente varie en fonction d'un deuxième stimulus extérieur entre le troisième élément sphérique et le logement,
- des moyens de génération desdits premier et deuxième stimuli sur commande dans lesdits premier et deuxième fluides.

Dans un exemple préféré, le premier et le deuxième fluide sont des fluides magnétorhéologique. Les moyens de génération des premier et deuxième stimuli comportent une première bobine électrique portée par le premier élément sphérique ou le deuxième élément et une deuxième bobine électrique portée par le troisième élément ou le logement. Au moins une partie du premier élément sphérique et une partie du deuxième élément sphérique forment un premier circuit magnétique et au moins une partie du troisième élément sphérique et une partie du logement forment un deuxième circuit magnétique.

La structure peut comporter une enveloppe en matériau amagnétique entre le deuxième élément sphérique et le troisième élément sphérique isolant le premier circuit magnétique dans le premier frein et le deuxième circuit magnétique dans le deuxième frein.

De préférence, la structure comporte un premier axe traversant le premier élément sphérique et dont les extrémités sont reçues dans le deuxième élément sphérique, ledit premier axe étant coaxial avec la première direction de rotation, et des deuxièmes axes alignés montés chacun entre le troisième élément sphérique et le logement, les deux deuxièmes axes étant coaxiaux à la deuxième direction de rotation.

Par exemple, la première bobine est dans le premier élément sphérique et une connexion électrique de ladite bobine avec une source électrique passe à travers le premier axe.

La structure selon peut comporter un boîtier logeant les premier et deuxième freins haptiques et comprenant une ouverture duquel fait saillie l'effecteur, ladite interface comportant également une membrane fixée de manière étanche au bord de l'ouverture du boîtier et à l'effecteur de sorte à confiner les premier et deuxième fluides dans le boîtier.

De préférence, le premier et le deuxième fluide sont les mêmes et le remplissage en fluide de la structure se fait par ladite ouverture du boîtier.

Avantageusement, la membrane présente des propriétés élastiques telles qu'elles assurent une fonction de rappel sur l'effecteur.

La présente demande a également pour objet une interface haptique comportant :
- une structure selon l'invention,
- des moyens de mesure d'une position de l'élément d'interaction avec un utilisateur,
- une unité de commande apte à envoyer des ordres audits freins en fonction des informations sur la position de l'élément d'interaction avec l'utilisateur, de sorte que lesdits freins passifs génèrent des efforts résistants selon au moins un motif haptique donné.

La présente demande a également pour objet une interface de commande portable pour machine comportant au moins une interface haptique selon l'invention.

### BRÈVE DESCRIPTION DES DESSINS

La présente invention sera mieux comprise sur la base de la description qui va suivre et des dessins en annexe sur lesquels:
- la figure 1 est une vue en perspective d'un exemple d'interface haptique selon l'invention,
- la figure 2 est une vue en coupe de l'interface de la figure 1 selon les plans AA et BB orthogonaux,
- la figure 3 est une vue extérieure de la liaison pivot intérieure représentée seule,
- la figure 4 est une vue en coupe longitudinale de l'interface de la figure 1 selon le plan AA, dans laquelle la liaison pivot intérieure a été retirée
- la figure 5 est une vue en coupe longitudinale selon le plan BB orthogonal au plan AA dans laquelle la liaison pivot intérieure a été retirée,
- la figure 6 est une vue extérieure de la liaison pivot extérieure représentée seule,
- la figure 7 est une vue en coupe longitudinale de l'interface de la figure 1 selon le plan BB dans laquelle la liaison pivot extérieure a été retirée
- la figure 8 est une vue en coupe longitudinale selon le plan AA orthogonal au plan AA, dans laquelle la liaison pivot intérieure a été retirée,
- la figure 9 est une vue de détail de l'interface de la figure 1 au niveau d'une membrane d'étanchéité,
- la figure 10 est une vue en coupe selon le plan de l'interface de la figure 1 représentant les lignes de champ lorsque les bobines sont activées,
- la figure 11 est une représentation d'un exemple de combinaison de mouvements pouvant être imposée à l'effecteur grâce à la présente invention
- la figure 12 est une vue en coupe longitudinale selon la plan AA de l'interface de la figure 1 dans une position extrême de l'effecteur.
- la figure 13A et la figure 13B sont des vue en perspective d'un exemple d'interface comportant des capteurs permettant de détecter la position de l'effecteur.

### EXPOSÉ DÉTAILLÉ DE MODES DE RÉALISATION PARTICULIERS

Dans la description qui va suivre, les freins utilisent un fluide magnétorhéologique dont la viscosité est modifiée par application d'un champ magnétique. Néanmoins, la présente invention peut mettre en œuvre des freins à fluide électro-rhéologique, i.e. dont la viscosité est modifiée par application d'un champ électrique.

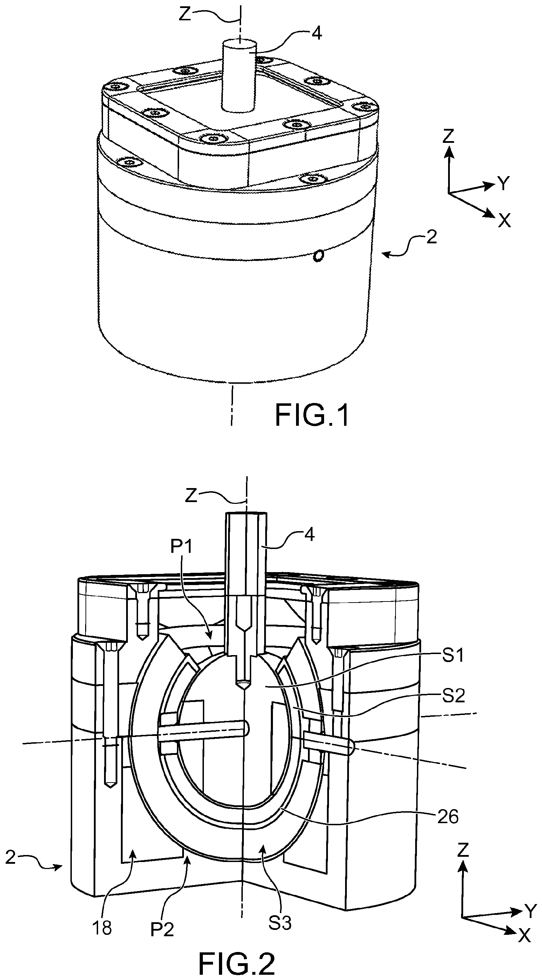

Sur les figures 1 et 2, on peut voir un exemple d'une interface haptique selon l'invention. Il comporte un boîtier 2 et un effecteur 4 ou joystick destiné à être manipulé par un utilisateur. L'effecteur est monté dans le boîtier 2 mobile autour de deux axes X et Y, de préférence orthogonaux. Le joystick s'étend selon un axe Z orthogonal aux axes X et Y.

L'interface comporte deux articulations pivots P1 et P2 entre l'effecteur 4 et le boîtier 2, ces articulations intégrant chacune un frein à fluide magnétorhéologique. L'articulation pivot P1 et désignée « articulation pivot intérieure » et l'articulation pivot P2 est désignée « articulation pivot extérieure ».

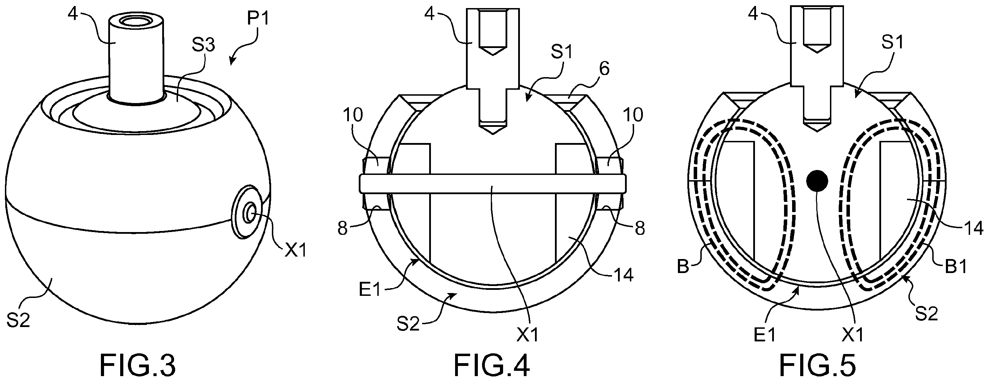

Sur les figures 3, 4 et 5, on peut voir l'articulation pivot intérieure P1 représentée seule. Elle comporte une première sphère S1 à laquelle est fixé l'effecteur 4, une deuxième sphère creuse S2 dans laquelle est logée la première sphère S1. La première sphère S1 et la deuxième sphère S2 sont concentriques. La deuxième sphère S2 comporte une ouverture 6 pour le passage de l'effecteur 4, l'ouverture 6 est dimensionnée pour offrir à l'effecteur un débattement suffisant. Un axe X1 s'étendant dans la direction X est prévu entre la première sphère S1 et la deuxième sphère S2, limitant ainsi le déplacement de la première sphère S1 par rapport à la deuxième sphère S2 à un déplacement en rotation autour de l'axe X. L'axe X1 traverse de part en part la première sphère et ses extrémités longitudinales sont reçues dans deux perçages 8 diamétralement opposés réalisés dans la paroi de la deuxième sphère. Avantageusement les extrémités de l'axe X1 sont reçues dans des paliers lisses 10 montés dans les perçages, réduisant ainsi les frottements.

Le diamètre extérieur de la première sphère S1 et le diamètre intérieur de la deuxième sphère S2 sont tels qu'un espace E1 suffisant pour recevoir du fluide magnétorhéologique est défini entre les deux sphères S1 et S2. La largeur de l'espace E1 est par exemple comprise entre 0,1 mm et 1 mm. Par exemple, ou une sphère S1 de rayon extérieur de 8 mm et une sphère S2 de rayon extérieur de 13 mm, l'espace E1 a une largeur de 0,25 mm.

L'articulation pivot intérieure P1 comporte des moyens de génération d'un champ magnétique par exemple une bobine 14, logés dans la première sphère S1. De préférence la bobine 14 forme une partie de la surface extérieure de la première sphère S1 et est coaxiale avec l'effecteur. La disposition de la bobine par rapport à l'espace E1 est telle que les lignes de champ magnétique B1 générées par la bobine 14 traversent l'espace E1 et donc le fluide magnétorhéologique qu'il contient et modifie sa viscosité suivant l'amplitude du champ magnétique. La première sphère S1 et la deuxième sphère S2 forme un premier circuit magnétique.

De manière très avantageuse, la bobine 14 est connectée à une alimentation électrique par une connexion filaire remontant par l'intérieur de la sphère S1 et par l'axe de l'effecteur 4 qui est avantageusement creux.

La mise en œuvre du fluide magnétorhéologique et de la bobine permet d'intégrer un frein passif dans la première articulation pivot.

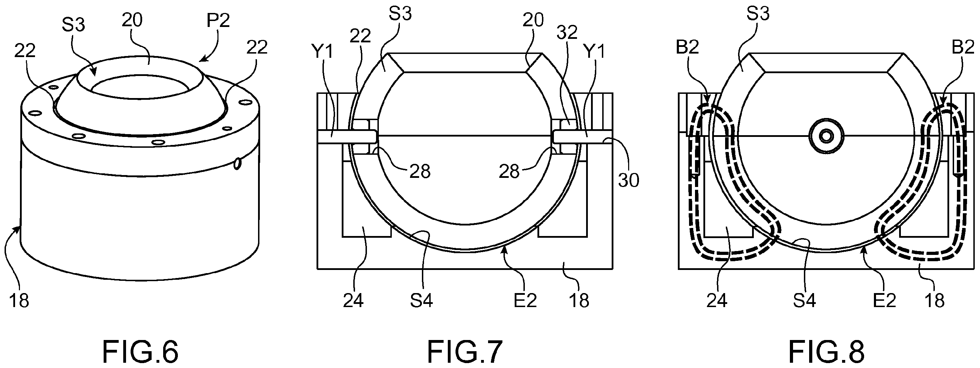

L'articulation pivot extérieure P2 est représentée seule sur les figures 6, 7 et 8. L'articulation pivot extérieure P2 comporte une troisième sphère S3 creuse pour loger la deuxième sphère S2 et un logement 18 comportant un surface intérieure sphérique S4, logeant la troisième sphère S3, le logement 18 est fixe par rapport au boîtier. Dans l'exemple représenté, le logement S4 est formé par le boîtier 2 qui comporte une surface intérieure sphérique. La troisième sphère S3 et la surface intérieure S4 sont concentriques.

La troisième sphère comporte une ouverture 20 pour le passage de l'effecteur, celle-ci est dimensionnée pour permettre un débattement suffisant de l'effecteur, et le logement 18 comporte une ouverture 22 pour le passage de l'effecteur, celle-ci est dimensionnée pour permettre un débattement suffisant de l'effecteur,

Un espace 2 est ménagé entre la surface extérieure de la troisième sphère S3 et la surface intérieure S4 pour loger du fluide magnétorhéologique.

La liaison pivot extérieure P2 comporte des moyens de génération d'un champ magnétique par exemple une bobine électrique 24, logés dans le logement 18. De préférence, la bobine 24 forme une partie de la surface sphérique S4 et est coaxiale avec l'effecteur en position repos. La disposition de la bobine par rapport à l'espace E2 est telle que les lignes de champ magnétique B2 générées par la bobine 24 traversent l'espace E2 et donc le fluide magnétorhéologique qu'il contient et modifie sa viscosité suivant l'amplitude du champ magnétique. La troisième sphère S3 et le logement 18 forment un deuxième circuit magnétique.

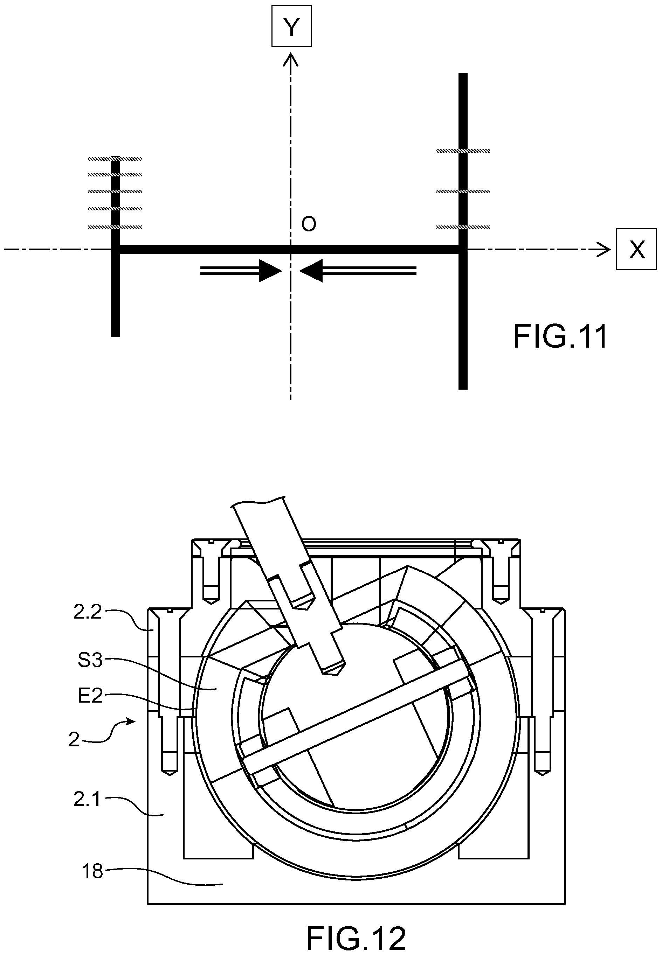

Dans l'exemple représenté, le boîtier 2 dans lequel est ménagé le logement 18 comporte une partie inférieure 2.1 en matériau ferromagnétique et une partie 2.2 en matériau amagnétique, ce qui permet de concentrer le flux magnétique sur des zones en regard avec la sphère S3, notamment lorsque celle-ci est dans une position extrême comme celle représenté sur la figure 12. Ainsi il n'y a pas de perte de flux magnétique hors de l'espace E1.

La mise en œuvre du fluide magnétorhéologique et de la bobine permet d'intégrer un frein passif dans l'articulation pivot extérieure P2.

De préférence, la bobine 24 est portée par le logement 18, ainsi la connexion à la source électrique est simplifiée. En variante, la bobine 24 est portée par la troisième sphère S3.

Deux axes Y1 s'étendant dans la direction Y sont prévus entre la troisième sphère S3 et le logement 18, limitant ainsi le déplacement de la troisième sphère S3 par rapport à au logement 18 à un déplacement en rotation autour de l'axe Y. Chaque axe Y1 est monté dans un perçage 28 réalisé dans la paroi de troisième sphère S3 et dans un perçage 30 réalisé dans le logement 18. Avantageusement et comme cela est représenté, les axes Y1 sont fixés dans les perçages 30 et sont montés dans des paliers lisses 32 logés dans les perçages 28.

La deuxième sphère S2 est montée dans la troisième sphère S3.

Les première, deuxième et troisième sphères et le logement 18 sont en matériau ferromagnétique, par exemple en fer doux.

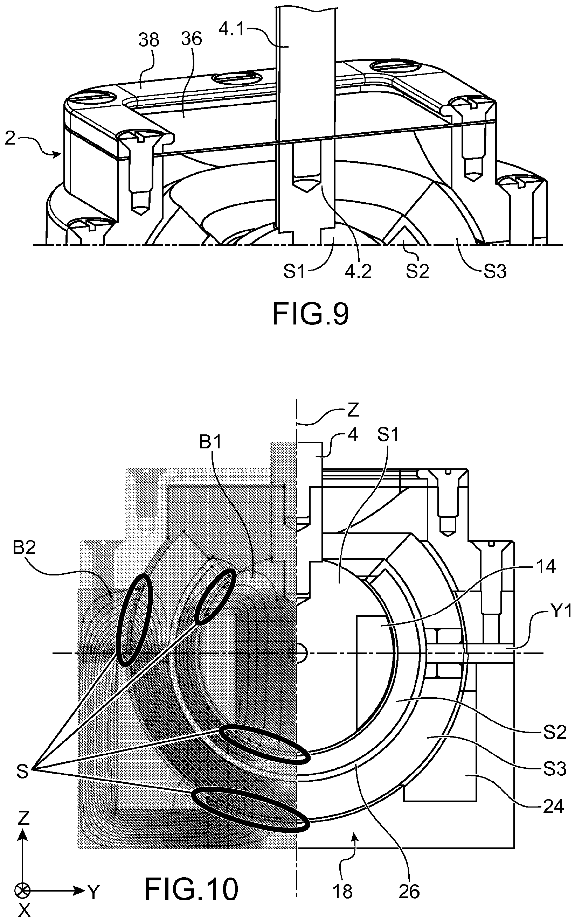

Une isolation magnétique est prévue entre les deux articulations pivots P1, P2 pour éviter que l'activation d'une bobine de l'une des liaisons pivots ait une action sur le fluide magnétorhéologique de l'autre liaison pivot. Ainsi les deux articulations P1 et P2 sont indépendantes et le ressenti haptique est largement amélioré. L'isolation magnétique est obtenue par une enveloppe amagnétique 26 formant entretoise entre la deuxième sphère S2 et la troisième sphère S3. Comme cela est visible sur la figure 2, l'enveloppe 26 est telle qu'elle enveloppe entièrement la deuxième sphère S2 et recouvre également les rebords de l'ouverture 6 afin de confiner au mieux les lignes de champ dans l'espace E1, et d'éviter que les lignes de champ B1 circulent dans la troisième sphère ou dans le fluide non compris dans l'espace E1. L'enveloppe 26 assure avantageusement l'immobilisation en rotation de la deuxième sphère S2 dans la troisième sphère S3. Dans l'exemple représenté, l'enveloppe 26 comporte des saillies radiales 34 pénétrant dans les perçages 28 de la troisième sphère S3 (figure 10), logeant les axes Y1. L'enveloppe 26 est par exemple en aluminium ou en matériau plastique non conducteur.

L'enveloppe est avantageusement moulée ou réalisée par impression 3D, notamment lorsqu'elle est en matériau plastique. En variante lorsqu'elle est en métal l'enveloppe peut être usinée.

De manière très avantageuse et comme cela est représenté en détail sur la figure 9, le confinement étanche du fluide magnétorhéologique est réalisé au moyen d'une membrane 36 munie d'un passage pour le passage de l'effecteur et fixé sur l'effecteur et sur les bords de l'ouverture 22 du logement 18. Cette membrane présente l'avantage de ne pas générer de frottement contrairement à des joints toriques.

De manière avantageuse, la membrane 36 est tendue entre l'effecteur et le boîtier et possède des propriétés élastiques, elle assure alors une fonction de rappel de l'effecteur en position repos. Par exemple la membrane est réalisée dans un matériau élastomère compatible avec le fluide magnétorhéologique, notamment avec les huiles contenues dans les fluide magnétorhéologiques. Par exemple la membrane est copolymères butadiène-acrylonitrile, aussi appelés « caoutchoucs nitrile » désignés NBR (Nitrile Butadiene Rubber en terminologie anglo-saxonne) ou en EPDM (éthylène-propylène-diène monomère). L'intensité de la force de rappel peut être facilement ajustée en choisissant une membrane plus ou moins épaisse et/ou un matériau plus ou moins rigide.

Dans l'exemple représenté, le bord extérieur de la membrane est pincé entre le boîtier et un couvercle 38, et l'effecteur comporte deux parties 4.1 et 4.2 par exemple solidarisées par vissage, le bord du passage est alors pincé entre les deux parties 4.1 et 4.2, un collage supplémentaire peut être envisagé. Le couvercle 38 est par exemple vissé sur le boîtier 2.

Cet arrangement permet un remplissage facilité et simultané des deux espaces E1, E2 avec le fluide magnétorhéologique. Ensuite la membrane est mise en place. En variante, chaque espace est rempli avec un fluide différent et les deux espaces sont isolés de manière étanche l'un de l'autre.

Il sera compris que pour l'assemblage de l'interface, plusieurs éléments sont réalisés en deux parties ou plus, tels que la deuxième sphère, la troisième sphère, le logement 18 est réalisée en deux parties. Les différentes parties de chaque sphère sont par exemple assemblées par collage.

L'articulation ainsi réalisée bloque la rotation de l'effecteur autour de l'axe Z, ce qui est permet avantageusement à l'effecteur de conserver l'effecteur dans l'orientation définie.

Sur la partie gauche de figure 10, la référence S désigne les zones de cisaillement du fluide, i.e. les zones des espaces E1 et E2 traversées par les lignes de champ B1 et B2 respectivement. On constate que lorsque les deux bobines génèrent chacune leur flux magnétique, il n'y pas de fuite de flux magnétique. Les deux freins sont donc isolés magnétiquement l'un de l'autre et peuvent être actionnés sans avoir d'effet sur l'autre frein.

Le fluide magnétorhéologique présent dans les espaces E1 et E2 est soumis à un phénomène de cisaillement lors de la rotation des sphères S1 et S3. La viscosité du fluide magnétorhéologique au repos étant faible, les couples exercés sur les sphères sont quasiment nuls. Cependant, lorsque la bobine d'un frein est parcourue par un courant électrique, un champ magnétique est généré dans son circuit magnétique. Le fluide est alors traversé en plusieurs zones par ce champ magnétique. Du fait de l'alignement des microparticules ferromagnétiques du fluide, sa viscosité est augmentée dans ces zones. Ce phénomène crée un effort résistant entre les sphères fixe et mobile, proportionnel à l'intensité du courant électrique de commande.

Lorsque la bobine 14 est parcourue par un courant électrique de commande, un champ magnétique B1 est généré dans le circuit magnétique et traverse l'espace E1. Les microparticules ferromagnétiques du fluide magnétorhéologique s'alignent et sa viscosité augmente. Un couple proportionnel à l'intensité du courant électrique de commande s'oppose à la rotation de la première sphère S1 autour de l'axe X.

Le fonctionnement est similaire lorsqu'un courant électrique traverse la bobine 24, un champ magnétique B2 est généré dans l'espace E2 et donc dans le fluide magnétorhéologique contenu dans l'espace E2, la viscosité apparente de celui augmente et un couple proportionnel à l'intensité du courant électrique de commande s'oppose à la rotation de la troisième sphère S3 autour de l'axe Y.

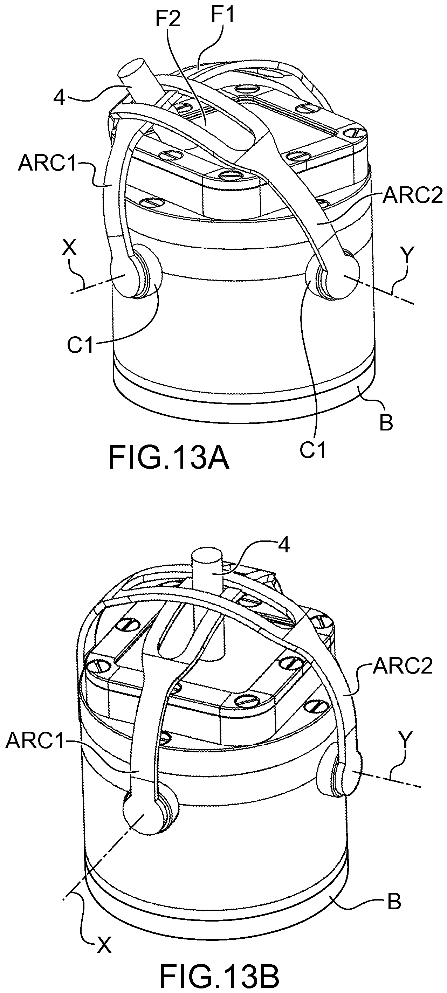

Avantageusement, l'interface comporte des capteurs pour connaître les angles de rotation des sphères autour des directions X et Y. Par exemple, des capteurs de rotation peuvent être positionnés directement sur les axes X1 et Y1. De préférence et comme cela est représenté à titre d'exemple sur les figures 13A et 13B, on mesure la rotation de l'effecteur autour des directions X et Y en utilisant par exemple des arceaux ARC1 et ARC2 montés respectivement en rotation autour des directions X et Y et comportant chacun une fenêtre F1 et F2 traversée par l'effecteur. Ainsi tout mouvement de l'effecteur autour des directions X et Y provoquent la rotation de l'arceau ARC1 autour de la direction X et/ou de l'arceau ARC2 autour de la direction Y. Des capteurs de rotations C1, et C2 sont par exemple positionnés au niveau des extrémités des arceaux articulées sur le boîtier.

Avantageusement, l'interface comporte également un capteur de détection de l'intention d'action de l'utilisateur sur l'effecteur, ce qui permet d'améliorer le comportement de l'interface, notamment en réduisant, voire en évitant les phénomènes de collage. Le capteur de détection de l'intention d'action de l'utilisateur comporte par exemple un capteur de couple autour de axes X ou Y et/ou un capteur de force autour des axes X et Y. Le capteur est par exemple disposé sous le boîtier, entre le boîtier et le bâti B sur lequel est fixée l'interface.

Du fait de la différence de taille entre les deux circuits magnétiques, un effort de freinage moins important s'applique sur l'axe X. Les motifs haptiques sont conçus de sorte à tenir compte de cette différence de couple générale entre les deux freins.

Dans l'exemple décrit, c'est le même fluide dans les deux espaces E1 et E2. Dans un autre exemple, chaque espace E1 et E2 est rempli avec un fluide différent, afin d'avoir une action en cisaillement serait plus forte sur l'axe X pour compenser la différence de taille entre les deux freins. Par exemple, le fluide remplissant l'espace E1 serait plus concentré en particules ferromagnétiques. Dans cet exemple des joints sont prévus entre les sphères pour éviter la circulation du fluide entre les deux espaces E1 et E2.

La mise en œuvre de frein à fluide magnétorhéologique présente l'avantage d'être très robuste. En effet, si l'effort exercé par l'opérateur sur l'effecteur est trop important à l'encontre d'un couple de freinage, il n'y a aucune rupture de pièce du système, mais un glissement des sphères mobiles suite à une désolidarisation des chaînes de particules du fluide.

Il peut être envisagé que la structure des deux articulations pivots soient mobiles le long de la direction Z, par exemple pour permettre un « clic », par exemple sur un bouton poussoir placé sous la structure.

Sur la figure 11, on peut voir une visualisation d'un exemple d'un motif de déplacement réalisable grâce à la présente invention.

On souhaite que l'effecteur ne puisse se déplacer que suivant un motif haptique en forme de « H ». On considère un repère XOY avec l'origine O au centre de la barre du H, l'axe X contenant la barre du H. Les deux pieds du H sont orientés parallèlement à l'axe Y. Les deux freins peuvent être facilement configurés pour n'autoriser que ces déplacements.

En outre, on souhaite une course suivante l'axe Y plus courte le long du pied situé à une valeur X<0 et pour des valeurs de Y>0 et Y<0, par rapport au pied situé à valeur de X>0.

En outre, on souhaite un crantage serré (symbolisé par les traits rapprochés) sur la course le long de Y pour X<0 et Y>0, haut », et un crantage distant (symbolisé par traits plus éloignés) sur la course le long de Y pour X>0 et Y>0.

La limitation du déplacement selon X et/ou Y est obtenu en activant le ou les freins de sorte que le couple ou les couples de freinage générés soient suffisants pour bloquer le déplacement de l'effecteur à la fois autour de l'axe X et autour de l'axe Y.

Le dispositif selon l'invention présente une grande compacité. Par exemple le boîtier 2 peut présenter un diamètre extérieur de 34 mm et une hauteur de 30 mm. Il peut ainsi être relativement facilement intégrable dans des commandes mobiles, type tablette ou manette.

La présente invention s'applique à des interfaces de commande de type joystick qui nécessitent une configuration suivant l'usage, par exemple à des joysticks pour la commande de machines de type pont roulant, machines de manutention, et à des manettes de jeux vidéo, dans les télécommandes pour le modélisme.

## Revendications

1. Structure pour interface haptique à deux degrés de liberté comportant :
- un élément d'interaction avec l'utilisateur, destiné à être mobile selon deux degrés de liberté,
- un premier frein passif et un deuxième frein passif aptes à exercer un effort résistant autour d'un premier axe et d'un deuxième axe respectivement,
- le premier frein passif comportant une première liaison pivot (P1) autour d'une première direction de rotation (X) comportant un premier élément sphérique (S1) auquel est fixé l'effecteur (4), reçu dans un deuxième élément sphérique (S2) formant logement pour le premier élément sphérique (S1), le déplacement du premier élément sphérique (S1) dans le deuxième élément sphérique (S2) étant une rotation autour de la première direction de rotation (X),
- le deuxième frein passif comportant une deuxième liaison pivot autour d'une deuxième direction de rotation (Y) comportant un troisième élément sphérique (S3) solidaire en mouvement du deuxième élément sphérique (S2) et reçu dans un logement (18) comportant une paroi sphérique (S4), le déplacement du troisième élément sphérique (S3) dans le logement (18) étant une rotation autour de la deuxième direction de rotation (Y),
- un premier fluide dont la viscosité apparente varie en fonction d'un premier stimulus extérieur entre le premier élément sphérique (S1) et le deuxième élément sphérique (S2),
- un deuxième fluide dont la viscosité apparente varie en fonction d'un deuxième stimulus extérieur entre le troisième élément sphérique (S3) et le logement (18),
- des moyens de génération desdits premier et deuxième stimuli sur commande dans lesdits premier et deuxième fluides.

2. Structure selon la revendication 1, dans laquelle le premier et le deuxième fluide sont des fluides magnétorhéologiques, dans lequel les moyens de génération des premier et deuxième stimulus comportent un première bobine électrique (14) portée par le premier élément sphérique (S1) ou le deuxième élément (S2) et une deuxième bobine électrique (24) portée par le troisième élément (S3) ou le logement (18), et dans lequel au moins une partie du premier élément sphérique (S1) et une partie du deuxième élément sphérique (S2) forment un premier circuit magnétique et au moins une partie du troisième élément sphérique (S3) et une partie du logement (18) forment un deuxième circuit magnétique.

3. Structure selon la revendication 2, comporte une enveloppe (26) en matériau amagnétique entre le deuxième élément sphérique (S2) et le troisième élément sphérique(S3) isolant le premier circuit magnétique dans le premier frein et le deuxième circuit magnétique dans le deuxième frein.

4. Structure selon l'une des revendications 1 à 3, comportant un premier axe (X1) traversant le premier élément sphérique (S1) et dont les extrémités sont reçues dans le deuxième élément sphérique (S2), ledit premier axe (X1) étant coaxial avec la première direction de rotation (X), et des deuxièmes axes (Y1) alignés montés chacun entre le troisième élément sphérique (S3) et le logement (18), les deux deuxièmes axes (Y1) étant coaxiaux à la deuxième direction de rotation (Y).

5. Structure selon la revendication 2 ou la revendication 3 en combinaison avec la revendication 4, dans laquelle la première bobine (14) est dans le premier élément sphérique (S1) et une connexion électrique de ladite bobine (14) avec une source électrique passe à travers le premier axe (X1).

6. Structure selon l'une des revendications 1 à 5, comportant un boîtier (2) logeant les premier et deuxième freins passifs et comprenant une ouverture duquel fait saillie l'effecteur (4), ladite interface comportant également une membrane (36) fixée de manière étanche au bord de l'ouverture du boîtier et à l'effecteur de sorte à confiner les premier et deuxième fluides dans le boîtier.

7. Structure selon la revendication précédente, dans laquelle le premier et le deuxième fluide sont les mêmes et dans lequel le remplissage en fluide de la structure se fait par ladite ouverture du boîtier.

8. Structure selon la revendication 6 ou la revendication 7, dans laquelle la membrane (36) présente des propriétés élastiques telles qu'elles assurent une fonction de rappel sur l'effecteur.

9. Interface haptique comportant :
- une structure selon l'une des revendications précédentes,
- des moyens de mesure d'une position de l'élément d'interaction avec un utilisateur,
- une unité de commande apte à envoyer des ordres audits freins en fonction des informations sur la position de l'élément d'interaction avec l'utilisateur, de sorte que lesdits freins passifs génèrent des efforts résistants selon au moins un motif haptique donné.

10. Interface de commande portable pour machine comportant au moins une interface haptique selon la revendication précédente.

## Patentansprüche

1. Struktur für eine haptische Schnittstelle mit zwei Freiheitsgraden, die beinhaltet:
- ein Element zur Wechselwirkung mit dem Benutzer, das dazu bestimmt ist, gemäß zwei Freiheitsgraden beweglich zu sein,
- eine erste passive Bremse und eine zweite passive Bremse, die imstande sind, eine Widerstandskraft jeweils um eine erste Achse und eine zweite Achse herum auszuüben,
- wobei die erste passive Bremse eine erste Schwenkverbindung (P1) um eine erste Drehrichtung (X) herum beinhaltet, die ein erstes sphärisches Element (S1) beinhaltet, an dem der Effektor (4) befestigt ist, der in einem zweiten sphärischen Element (S2) aufgenommen ist, das eine Aufnahme für das erste sphärische Element (S1) bildet, wobei die Verschiebung des ersten sphärischen Elements (S1) in dem zweiten sphärischen Element (S2) eine Drehung um die erste Drehrichtung (X) herum ist,
- wobei die zweite passive Bremse eine zweite Schwenkverbindung um eine zweite Drehrichtung (Y) herum beinhaltet, die ein drittes sphärisches Element (S3) beinhaltet, das mit dem zweiten sphärischen Element (S2) bewegungsverbunden ist, und in einer Aufnahme (18) aufgenommen ist, die eine sphärische Wand (S4) beinhaltet, wobei die Verschiebung des dritten sphärischen Elements (S3) in der Aufnahme (18) eine Drehung um die zweite Drehrichtung (Y) herum ist,
- ein erstes Fluid, dessen scheinbare Viskosität sich in Abhängigkeit von einem ersten äußeren Stimulus zwischen dem ersten sphärischen Element (S1) und dem zweiten sphärischen Element (S2) ändert,
- ein zweites Fluid, dessen scheinbare Viskosität sich in Abhängigkeit von einem zweiten äußeren Stimulus zwischen dem dritten sphärischen Element (S3) und der Aufnahme (18) ändert,
- Mittel zum Erzeugen des ersten und zweiten Stimulus auf Befehl im ersten und zweiten Fluid.

2. Struktur nach Anspruch 1, wobei das erste und das zweite Fluid magnetorheoligische Fluide sind, wobei die Mittel zum Erzeugen des ersten und zweiten Stimulus eine erste elektrische Spule (14), die von dem ersten sphärischen Element (S1) oder dem zweiten sphärischen Element (S2) getragen wird, und eine zweite elektrische Spule (24) beinhalten, die von dem dritten Element (S3) oder der Aufnahme (18) getragen wird, und wobei mindestens ein Teil des ersten sphärischen Elements (S1) und ein Teil des zweiten sphärischen Elements (S2) einen ersten Magnetkreis bilden und mindestens ein Teil des dritten sphärischen Elements (S3) und ein Teil der Aufnahme (18) einen zweiten Magnetkreis bilden.

3. Struktur nach Anspruch 2, die eine Hülle (26) aus unmagnetischem Material zwischen dem zweiten sphärischen Element (S2) und dem dritten sphärischen Element (S3) beinhaltet, die den ersten Magnetkreis in der ersten Bremse und den zweiten Magnetkreis in der zweiten Bremse isoliert.

4. Struktur nach einem der Ansprüche 1 bis 3, die eine erste Achse (X1) beinhaltet, die das erste sphärische Element (S1) durchquert, und deren Enden in dem zweiten sphärischen Element (S2) aufgenommen sind, wobei die erste Achse (X1) koaxial mit der ersten Drehrichtung (X) ist, und zweite ausgerichtete Achsen (Y1), die jeweils zwischen dem dritten sphärischen Element (S3) und der Aufnahme (18) montiert sind, wobei die beiden zweiten Achsen (Y1) koaxial mit der zweiten Drehrichtung (Y) sind.

5. Struktur nach Anspruch 2 oder Anspruch 3, in Kombination mit Anspruch 4, wobei die erste Spule (14) im ersten sphärischen Element (S1) ist, und eine elektrische Verbindung der Spule (14) mit einer Stromquelle durch die erste Achse (X1) verläuft.

6. Struktur nach einem der Ansprüche 1 bis 5, die ein Gehäuse (2) beinhaltet, das die erste und zweite passive Bremse aufnimmt und eine Öffnung umfasst, aus welcher der Effektor (4) hervorsteht, wobei die Schnittstelle auch eine Membran (36) beinhaltet, die in dichter Form am Rand der Öffnung des Gehäuses und am Effektor befestigt ist, um das erste und zweite Fluid in dem Gehäuse einzusperren.

7. Struktur nach dem vorstehenden Anspruch, wobei das erste und das zweite Fluid die gleichen sind und wobei das Füllen der Struktur mit Fluid über die Öffnung des Gehäuses erfolgt.

8. Struktur nach Anspruch 6 oder Anspruch 7, wobei die Membran (36) solche elastischen Eigenschaften aufweist, dass sie für eine Rückstellfunktion am Effektor sorgen.

9. Haptische Schnittstelle, die beinhaltet:
- eine Struktur nach einem der vorstehenden Ansprüche,
- Mittel zum Messen einer Position des Elements zur Wechselwirkung mit einem Benutzer,
- eine Steuereinheit, die imstande ist, in Abhängigkeit von den Informationen über die Position des Elements zur Wechselwirkung mit dem Benutzer Befehle zu den Bremsen zu senden, sodass die passiven Bremsen Widerstandskräfte gemäß mindestens einem gegebenen haptischen Motiv erzeugen.

10. Tragbare Steuerschnittstelle für eine Maschine, die mindestens eine haptische Schnittstelle nach dem vorstehenden Anspruch beinhaltet.

## Claims

1. A structure for a two-degree-of-freedom haptic interface including:
- an element for interaction with the user, intended to be movable according to two degrees of freedom,
- a first passive brake and a second passive brake capable of exerting a resistive force about a first axis and a second axis respectively,
- the first passive brake comprising a first pivot connection (P1) about a first direction of rotation (X) including a first spherical element (S1) to which the effector (4) is fastened, received in a second spherical element (S2) forming a housing for the first spherical element (S1), the displacement of the first spherical element (S1) in the second spherical element (S2) being a rotation about the first direction of rotation (X),
- the second passive brake including a second pivot connection about a second direction of rotation (Y) including a third spherical element (S3) secured in movement to the second spherical element (S2) and received in a housing (18) including a spherical wall (S4), the displacement of the third spherical element (S3) in the housing (18) being a rotation about the second direction of rotation (Y),
- a first fluid whose apparent viscosity varies depending on a first external stimulus between the first spherical element (S1) and the second spherical element (S2),
- a second fluid whose apparent viscosity varies depending on a second external stimulus between the third spherical element (S3) and the housing (18),
- means for generating said first and second stimuli on command in said first and second fluids.

2. The structure according to claim 1, wherein the first and second fluids are magnetorheological fluids, wherein the means for generating the first and second stimuli include a first electric coil (14) carried by the first spherical element (S1) or the second element (S2) and a second electric coil (24) carried by the third element (S3) or the housing (18), and wherein at least one portion of the first spherical element (S1) and one portion of the second spherical element (S2) form a first magnetic circuit and at least one portion of the third spherical element (S3) and one portion of the housing (18) form a second magnetic circuit.

3. The structure according to claim 2, includes an envelope (26) made of non-magnetic material between the second spherical element (S2) and the third spherical element (S3) isolating the first magnetic circuit in the first brake and the second magnetic circuit in the second brake.

4. The structure according to one of claims 1 to 3, including a first axis (X1) passing through the first spherical element (S1) and whose ends are received in the second spherical element (S2), said first axis (X1) being coaxial with the first direction of rotation (X), and second aligned axes (Y1) each mounted between the third spherical element (S3) and the housing (18), the two second axes (Y1) being coaxial with the second direction of rotation (Y).

5. The structure according to claim 2 or claim 3 in combination with claim 4, wherein the first coil (14) is in the first spherical element (S1) and an electrical connection of said coil (14) with an electrical source passes through the first axis (X1).

6. The structure according to one of claims 1 to 5, including a casing (2) housing the first and second passive brakes and comprising an opening from which the effector (4) protrudes, said interface also including a membrane (36) fastened in a sealed manner to the edge of the opening of the casing and to the effector so as to confine the first and second fluids in the casing.

7. The structure according to the preceding claim, wherein the first and second fluids are the same and wherein the structure is filled with fluid via said opening of the casing.

8. The structure according to claim 6 or claim 7, wherein the membrane (36) has elastic properties such that they ensure a return function on the effector.

9. A haptic interface including:
- a structure according to one of the preceding claims,
- means for measuring a position of the interaction element with a user,
- a control unit capable of sending orders to said brakes depending on the information on the position of the element for interaction with the user, such that said passive brakes generate resistant forces according to at least one given haptic pattern.

10. A portable control interface for a machine including at least one haptic interface according to the preceding claim.
